# EUROPEAN PATENT SPECIFICATION

(11) **EP 0 583 311 B1**
(45) Date of publication and mention of the grant of the patent: **05.02.1997**
(21) Application number: 92909673.3
(22) Date of filing: 30.04.1992
(51) Int. Cl.: B60R 9/06

(54) **CYCLE RACK**
FAHRRADTRÄGER
SUPPORT POUR BICYCLETTES

(30) Priority: 30.04.1991 DK 792/91
(43) Date of publication of application: 23.02.1994
(73) Proprietor: ERIK SCHMIDT AUTOTILBEHOR APS, DK-7400 Herning (DK)
(72) Inventor: SCHMIDT, Erik, DK-7400 Herning (DK)
(74) Representative: Indahl, Peter Jensen
(86) International application number: PCT/DK92/00139
(87) International publication number: WO 92/19470

(56) References cited:
- WO-A-90/12704
- DK-A- 910 792
- DK-B- 148 531
- SE-A- 7 906 739
- SE-A- 8 803 773
- US-A- 4 428 516

## Description

The present invention relates to a cycle and/or ski rack comprising a set of branches arranged in V-shape and interconnected by means of a lower spacing link means at the apex end of the V-shape and of an upper toggle-joint-like link connection with two link arms, and comprising gripping and holding means which are mounted in between the branches at the link means and are adapted for gripping an object, such as a ball associated with a towing hitch located behind a vehicle, when the branches are placed and held in a tightening state with the two link arms in a mutually parallel position, a carrying arm for cycles or skis being arranged on each of the branches. Such a device is known from the document WO-A-90/12704.

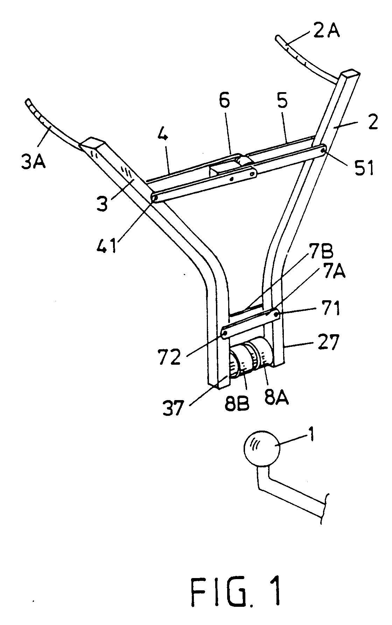

Such a known cycle and/or ski rack is shown in Fig. 1 together with a ball or towing ball on a towing hitch, for e.g. a caravan towed by an automobile. For the sake of ease, the cycle and/or the ski rack is designated the cycle rack in the following. The cycle rack carries in its upper portion projecting arms for suspension of cycles and/or for acting as supporting means for skis which may further be supported at the bottom by a basket. The arms are welded on to the V-branches.

Although such a known cycle rack is distinguished by being foldable in an easy manner, the two branches of the V-shape allowing themselves to be placed together almost in parallel along the main part of their length, apart from the area for gripping the ball hitch of an automobile, so that the folded cycle rack can be placed in the boot of the automobile when the cycle rack is not in use, the cycle rack does, however, take up much space when it has to be packed or wrapped for transportation from the producer to the purchaser/consumer or for other shipment.

Swedish patent application No. 8803773 describes a cycle rack with a pair of branches arranged in V-shape with a downward apex and with an upper toggle joint for distending the branches when the cycle rack is mounted on the ball hitch. At the extreme ends of the two link arms of the toggle joint, two carrying arms are mounted, being individually swingable about respective vertical pivot axes so that in use the carrying arms can swing from side to side in the horizontal plane. This entails hazardous driving, particularly if, with a cycle suspended from the carrying arms, driving is performed at relatively high speeds whereby the centrifugal forces on the cycle may be noticeable, because the carrying arms with the cycle can swing to the side so that the cycle projects transversely from the rear end of the automobile and may hit either oncoming cars when swinging to one side, or cyclists or pedestrians when swinging to the other side.

Swedish patent application No. 79067393 describes a cycle rack of a somewhat different type, where the V-shape arranged branches have an upward apex, while the holding means for the ball hitch are welded on to the free ends of the branches. The carrying arms are mounted on an upper carrying beam of an unchangeable shape preventing folding of the cycle rack, and besides the cycle rack is so high that the carrying beam is level with the roof of the automobile. The carrying arms are individually swingably mounted about vertical pivot axes so that the carrying arms can swing in the horizontal plane. It is true that each carrying arm is provided with a downward flap intended to lock the position of the arm, but if there are bumps in the road, so that the cycle will act on the arms with upward forces, which is the case, for example on a road with potholes, the arms may be released during driving and swing the cycle to the side resulting in the above risks.

US patent No. 4,428,516 describes a cycle rack of another type, where the rack is fastened to the oblique hatch of an automobile by means of straps, etc. The rack is foldable in one plane and has a rigid U-shaped unfoldable carrying part with two parallel branches so that the carrying arms can be swung in a joint motion about a joint horizontal pivot axis. Both the carrying bracket with the two carrying arms and the carrying part are rigid units which cannot be folded or change shape. The cycle rack is difficult and time-consuming to mount and presupposes that the automobile has an oblique hatch and a mounting groove in the roof. In addition it rests directly against the automobile, which most automobile owners will find undesirable.

It is substantial for the cycle rack of the above V-shaped type that the V-shaped branches together with the toggle-joint-like link connection are effective at the mounting of the cycle rack on or dismounting of it from a ball hitch, which provides simple mounting and dismounting of the cycle rack with few simple manoeuvres. The cycle rack can be folded to a flat condition with the two branches positioned adjacent each other, but as mentioned it is a disadvantage that in the folded condition it takes up much space because the carrying arms project at an almost right angle from the branches. An additional disadvantage of the cycle racks known from the Swedish references is the risks of sideways swinging of the mounted cycle during driving with the car.

An object of the invention is to provide a cycle rack which is simple in design and can be folded together into a relatively small volume for shipment or storage.

In view of this, the cycle rack mentioned in the introduction is characterized in that the carrying arms are mounted each individually swingable about respective pivot axes at the upper end portion of the respective branch, whereby the swingable mounting of each carrying arm to the upper end portion of the associated V-branch with the pivot axis extending through the V-branch in the direction of the other V-branch is so that the carrying arm is individually swingable in the upward and downward directions between two positions, of which in one position the carrying arm projects substantially horizontally from one side of the branch and in the other position extends substantially along the associated V-branch.

When the carrying arm has been swung away to the position aligned with the associated carrying branch, the cycle rack can be folded into a very compact state which allows the rack to be packed in a compact and easy manner or to be stored with only limited requirements as to storage space. When several racks are to be transported to the retailer, the racks may in the folded state be arranged next to each other with the carrying arms and the branches adjacent each other.

In consideration of safety during driving, the cycle rack preferably comprises a locking means for holding the swingable carrying arm in the projecting extreme position.

Embodiments of the invention will now be described in detail below with reference to the drawing, in which
Fig. 1 shows a perspective view of a known cycle rack and a ball hitch on which the cycle rack may be mounted,
Figs. 2 and 3 also show perspective views of an upper section of an embodiment of the cycle rack according to the invention with the carrying arms shown in a ready-to-carry position and in a swung-away position, respectively,
Fig. 4 shows an auxiliary carrying and locking means for mounting on the carrying arms, partly for providing extra holding means for holding long objects, such as skis, to the carrying arms of the cycle rack, partly for locking the carrying arms in a swung-down ready-to-carry position, and
Fig. 5 shows the auxiliary means mounted on a carrying arm on the cycle rack.

Identical elements or elements having the same functions have the same reference numeral in the drawing.

The cycle rack shown in Fig. 1 is V-shaped with oblique carrying branches 2 and 3 which at the upper portion support projecting carrying arms 2A and 3A for carrying at least one cycle or a pair of skis. At the apex area of the V-shape, the two carrying arms 2 and 3 are swingably interconnected via two parallel link means 7A and 7B which also keep the carrying branches 2 and 3 mutually spaced. Below the spacing link means 7A, 7B, two gripping and holding means 8A and 8B are fastened to the carrying branches. When the two branches 2 and 3 are moved apart in the area below the link means, also the holding means 8A, 8B are moved apart to permit their mounting on a ball 1 of the towing hitch of an automobile. When the lower ends of the carrying branches 2 and 3 are then tightened against each other about the ball 1, the cycle rack may be clamped and held securely on the ball 1. An upwardly open basket means may be arranged in the area at the arms 7A, 7B for supporting the lower ends of skis supported sideways further up by the carrying arms 2A and 3A.

The carrying branches 2 and 3 are held mutually in place by a toggle-joint-like link connection consisting of two parallel link arms 4 and 5 which can be locked at the middle area in an extended tightening state by a locking or barrier mechanism of a type known *per se*. The toggle joint mechanism can be opened by releasing this locking and moving the middle part at the barrier mechanism 6 upwards, passing the fully extended position, and arms 4 and 5 being pulled towards each other during simultaneous swinging about pivots 41 and 51.

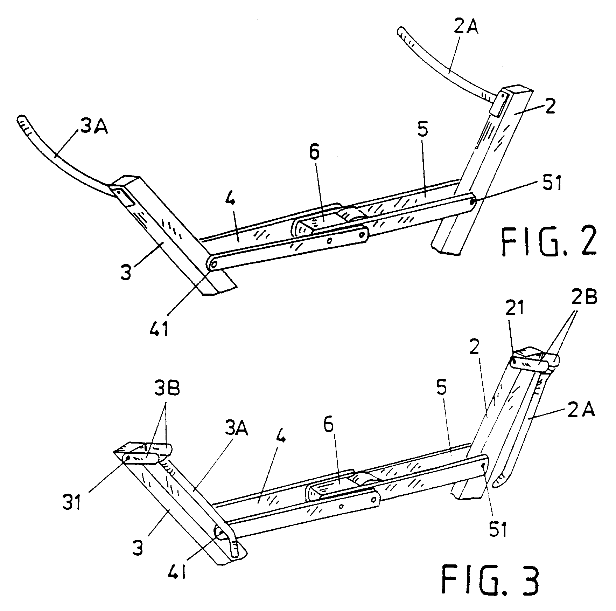

As shown in an embodiment of the cycle rack according to the invention in Figs. 2 and 3, the prior-art cycle rack has been further developed by making the carrying arms 2A, 3A swingable about pivot axes 21 and 31. The carrying arms 2A, 3A are fastened to respective bracket-shaped members 2B, 3B, which are swingable about pivot axes 21 and 31 and grip around opposite sides of the carrying arms 2 and 3.

Fig. 2 shows the carrying arms 2A, 3A in the carrying position where cycles and/or skis can be held by using the cycle rack, whereas Fig. 3 shows the carrying arms 2A, 3A in a swung-away position.

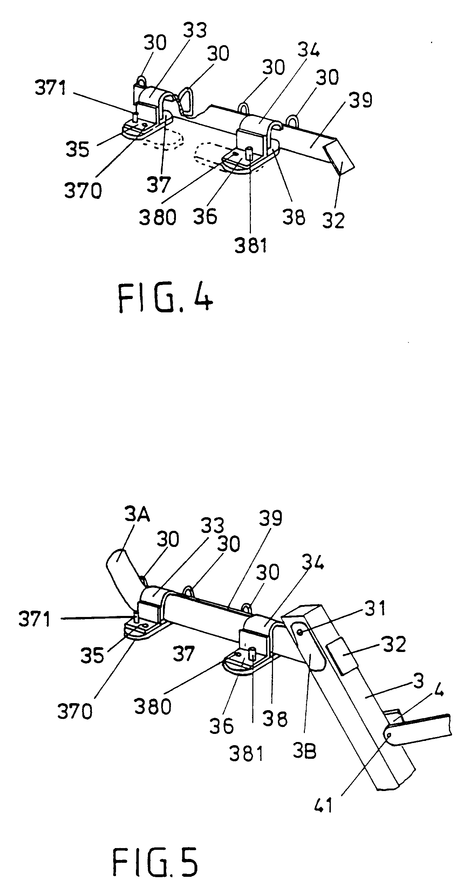

A further development of the cycle rack is illustrated in Figs. 4 and 5 which show an auxiliary carrying and locking means which can be mounted on the carrying arm 3A on the cycle rack according to need. A corresponding auxiliary carrying and locking means for the carrying arm 2A may be designed as a mirror image. The auxiliary carrying and locking means has a plurality of holding means 30 which may be annular or eyelet-shaped. Fig. 4 shows four rings 30, which are fastened at a mutual spacing, for example slightly larger than the width of a ski, to a straight piece of flat iron 39. To the holding means may be fastened, for example, end hooks positioned on a lashing strap or belt for lashing purposes. In Fig. 5, the piece of flat iron 39 is seen to be mounted on the carrying arm 3A by means of two partially U-shaped holding means 33 and 34, which by means of two angular brackets 35, 36 carry respective turnbuckle-formed pieces of band iron 37 and 38 journalled on the angular brackets 35 and 36 by means of pins 371 and 381. The band iron pieces 37 and 38 may be turned outwards to the position shown by dotted lines in Fig. 4, in which the whole auxiliary carrying and locking means may be lifted off or mounted on the carrying arm 3A. At the inward end of the flat iron piece 39 there is a bend 32 which, when the auxiliary carrying and locking means is mounted, can pass the carrying branch 3 of the cycle rack by turning the auxiliary carrying means slightly towards the left about an axis extending substantially in parallel with the axis of the carrying arm. In a mounted position, the bend 32 rests on the carrying branch 3A as shown in Fig. 5. Thus, the carrying arm 3A is held in the position shown and cannot be swung upwards. When the auxiliary carrying means is mounted, a padlock or a locking wire may be passed through through-going holes 370 and 380 to prevent theft of the auxiliary carrying means or of the objects fastened to it.

Skis or other longish objects may comfortably be supported downwards by a supporting basket positioned at the lower end of the cycle rack.

## Claims

1. A cycle and/or ski rack comprising a set of branches (2, 3) arranged in V-shape and interconnected by means of a lower spacing link means (7) at the apex end of the V-shape and of an upper toggle-joint-like link connection with two link arms (4, 5), and comprising gripping and holding means (8A, 8B) which are mounted in between the branches at the link means and are adapted for gripping an object, such as a ball (1) associated with a towing hitch located behind a vehicle, when the branches (2, 3) are placed and held in a tightening state with the two link arms in a mutually parallel position, a carrying arm (2A, 3A) for cycles or skis being arranged on each of the branches (2, 3), **characterized** in that the carrying arms (2A, 3A) are mounted each individually swingable about respective pivot axes at the upper end portion of the respective branch, whereby the swingable mounting of each carrying arm (2A; 3A) to the upper end portion of the associated V-branch (2; 3) with the pivot axis (21; 31) extending through the V-branch in the direction of the other V-branch is so that the carrying arm is individually swingable in the upward and downward directions between two positions, of which in one position the carrying arm projects substantially horizontally from one side of the branch and in the other position extends substantially along the associated V-branch (2; 3).

2. A cycle and/or ski rack according to claim 1, **characterized** by a locking means for holding the swingable carrying arm (2A, 3A) in the projecting position.

3. A cycle and/or ski rack according to claim 1 or 2, **characterized** in that the carrying arm (2A, 3A) is fastened to a carrying means at a distance to the pivot axis (21; 31) so that the carrying means can swing the carrying arm up past the upper end of the V-branch.

4. A cycle and/or ski rack according to claim 3, **characterized** in that the carrying means is a U-shaped bracket, the branches of which (2B, 3B) grip about the two opposite sides of the V-branch (2, 3) and are extended about the pivot axis (21, 31) so that the fastening of the carrying arm on the bracket is further away from the upper end of the V-branch than the pivot axis when the carrying arm is in said projecting position.

5. A cycle and/or ski rack according to any one of claims 1-4, **characterized** in that the carrying arm (2A; 3A) has at least one eyelet or gripping means (30) mounted as a fastening means for cycles or skis.

## Patentansprüche

1. Fahrrad- und/oder Skiträger, mit einem Satz von Schenkeln (2,3), die in V-Form angeordnet und mittels einer unteren Abstandsgelenkeinrichtung (7) am Scheitelende der V-Form und mittels einer oberen kniehebelartigen Gelenkverbindung mit zwei Gelenkarmen (4,5) miteinander verbunden sind, und mit Klemm- und Halteeinrichtungen (8A,8B), die zwischen den Schenkeln an der Gelenkeinrichtung angebracht und in der Lage sind, einen Gegenstand, wie etwa eine Kugel (1), die einer hinter einem Fahrzeug angeordneten Zugdeichsel zugeordnet ist, zu erfassen, wenn die Schenkel (2,3) in einem gespannten Zustand mit den beiden Gelenkarmen in einer gegenseitig parallelen Stellung gebracht und gehalten sind, wobei ein Tragarm (2A, 3A) für Fahrräder oder Skier an jedem der Schenkel (2,3) angeordnet ist, dadurch gekennzeichnet, daß die Tragarme (2A, 3A) jeweils einzeln schwenkbar um jeweilige Gelenkachsen am oberen Endbereich des jeweiligen Schenkels angebracht sind, wobei die schwenkbare Anbringung jedes Tragarmes (2A; 3A) am oberen Endbereich des zugehörigen V-Schenkels (2; 3) mit sich durch den V-Schenkel in Richtung des anderen V-Schenkels erstreckender Schwenkachse (21;31) derart ist, daß der Tragarm einzeln in Aufwärts- und Abwärtsrichtung zwischen zwei Stellungen schwenkbar ist, bei denen in der einen Stellung der Tragarm im wesentlichen horizontal von einer Seite des Schenkels vorsteht und sich in der anderen Stellung im wesentlichen entlang dem zugehörigen V-Schenkel (2; 3) erstreckt.

2. Fahrrad- und/oder Skiträger nach Anspruch 1, gekennzeichnet durch eine Verriegelungseinrichtung zum Halten des schwenkbaren Tragarmes (2A, 3A) in der vorstehenden Stellung.

3. Fahrrad- und/oder Skiträger nach Anspruch 1 oder 2, dadurch gekennzeichnet, daß der Tragarm (2A, 3A) an einer Trageinrichtung in einem Abstand zur Schwenkachse (21; 31) befestigt ist, so daß die Trageinrichtung den Tragarm nach oben am oberen Ende des V-Schenkels vorbei schwenken kann.

4. Fahrrad- und/oder Skiträger nach Anspruch 3, dadurch gekennzeichnet, daß die Trageinrichtung ein U-förmiger Halter ist, dessen Schenkel (2B, 3B) die beiden gegenüberliegenden Seiten des V-Schenkels (2,3) umfassen und sich über die Schwenkachse (21,31) hinauserstrecken, derart, daß die Befestigung des Tragarmes am Halter vom oberen Ende des V-Schenkels weiter entfernt ist als die Schwenkachse, wenn sich der Tragarm in der vorstehenden Stellung befindet.

5. Fahrrad- und/oder Skiträger nach einem der Ansprüche 1 bis 4, dadurch gekennzeichnet, daß der Tragarm (2A; 3A) zumindest eine als eine Befestigungseinrichtung für Fahrräder oder Skier angebrachte Öse oder Spanneinrichtung (30) aufweist.

## Revendications

1. Dispositif porte-cycle et/ou porte-ski comprenant un ensemble de branches (2, 3) en forme de V et reliées entre elles par des moyens d'espacement articulés inférieurs (7) sur l'extrémité apicale de la configuration en V et d'une liaison articulée supérieure du type à rotule avec deux bras articulés (4, 5) et comprenant des moyens de préhension et de maintien (8A, 8B) qui sont montés entre les branches au niveau des moyens articulés et qui sont aptes à serrer un objet, par exemple une boule (1), associée à un attelage de remorque situé derrière un véhicule, lorsque les branches (2, 3) sont placées et maintenues à l'état serré avec les deux bras articulés parallèles entre eux, un bras porteur (2A, 3A) pour cycles ou skis étant disposé sur chacune des branches (2, 3), caractérisé en ce que les bras porteurs (2A, 3A) sont montés, chacun de façon basculante ou pivotante individuellement autour d'axes de pivotement respectifs sur la portion d'extrémité supérieure de la branche respective de sorte que le montage basculant ou pivotant de chaque bras porteur (2A; 3A) sur la position d'extrémité supérieure de la branche en V associée (2; 3) avec l'axe de pivotement (21; 31) traversant la branche en V dans la direction de l'autre branche en V est tel à permettre au bras porteur de basculer individuellement vers le haut et vers le bas entre deux positions, de sorte que dans une position le bras porteur fait saillie sensiblement horizontalement à partir d'un côté de la branche et dans l'autre position, il s'étend sensiblement le long de la branche en V associée (2; 3).

2. Dispositif porte-cycle et/ou porte-ski selon la revendication 1, caractérisé par des moyens de blocage pour maintenir le bras porteur basculant ou pivotant (2A, 3A) dans la position en saillie.

3. Dispositif porte-cycle et/ou porte-ski selon la revendication 1 ou 2, caractérisé en ce que le bras porteur (2A, 3A) est assujetti sur des moyens porteurs à une certaine distance par rapport à l'axe de pivotement (21, 31) de sorte que les moyens porteurs peuvent faire basculer le bras porteur vers le haut devant l'extrémité supérieure de la branche en V.

4. Dispositif porte-cycle et/ou porte-ski selon la revendication 3, caractérisé en ce que les moyens porteurs sont constitués par un support en forme de U dont les branches (2B, 3B) enserrent les deux côtés opposés de la branche en V (2, 3) et s'étendent sur l'axe de pivotement (21, 31) de sorte que la fixation du bras porteur sur le support est plus éloignée de l'extrémité supérieure de la branche en V que l'axe de pivotement lorsque le bras porteur est dans la position en saillie.

5. Dispositif porte-cycle et/ou porte-ski selon l'une quelconque des revendications 1-4, caractérisé en ce que le bras porteur (2A; 3A) possède au moins un oeillet ou des moyens de préhension (30) montés comme moyens de fixation pour cycles ou skis.
